# EUROPÄISCHE PATENTSCHRIFT

(11) **EP 1 468 159 B1**
(45) Veröffentlichungstag und Bekanntmachung des Hinweises auf die Patenterteilung: **13.12.2006**
(21) Anmeldenummer: 02777312.6
(22) Anmeldetag: 15.10.2002
(51) Int. Cl.: E05F 15/12, E05F 15/10, B64C 1/14

(54) **VORRICHTUNG ZUM BETÄTIGEN VON TÜREN VON FAHRZEUGEN**
DEVICE FOR ACTUATING THE DOORS OF VEHICLES
DISPOSITIF POUR L'ACTIONNEMENT DE PORTES DE VEHICULES

(30) Priorität: 24.01.2002 DE 10202826
(43) Veröffentlichungstag der Anmeldung: 20.10.2004
(73) Patentinhaber: Wittenstein Motion Control GmbH, 97999 Igersheim (DE)
(72) Erfinder: HOFMANN, Werner, 97980 Bad Mergentheim (DE); ECK, Alexander, 97957 Poppenhausen (DE)
(74) Vertreter: Weiss, Peter
(86) Internationale Anmeldenummer: PCT/EP2002/011521
(87) Internationale Veröffentlichungsnummer: WO 2003/062576

(56) Entgegenhaltungen:
- DE-A- 3 121 136
- DE-C- 839 171
- US-A- 4 665 650
- US-B1- 6 168 114

## Beschreibung

Die vorliegende Erfindung betrifft eine Vorrichtung zum Betätigen von Türen von Fahrzeugen, insbesondere von Flugzeugen, mit einem Antriebselement, welches mit einer Türverriegelung zusammenwirkt.

Derartige Vorrichtungen zum Betätigen von Türen, insbesondere von Flugzeugen sind in vielfältiger Form und Ausführung auf dem Markt bekannt und gebräuchlich.

Herkömmlich werden mittels mechanischen Handverriegelungen Flugzeugtüren entriegelt und oftmals von Hand oder ggf. hydraulisch geöffnet.

Auch bekannt sind hydraulische Antriebseinrichtungen von Flugzeugtüren, die in einer Notbetätigung die Flugzeugtüren automatisch öffnen.

Häufig werden jedoch handverstellbare ggf. über aufwendigen apparative Gestänge Flugzeugtüren verriegelt und aufgeschwenkt.

Die US 4,665,650 beschreibt eine Einrichtung zum Betätigen von Gartentoren, bei welchem das Gartentor mittels einer im Torpfosten integrierten Antriebseinheit aus einer Verrieglung herausgehoben wird und während dem Herausheben das Tor eine Schwenkbewegung zum Öffnen des Cartentores erfährt.

Die US 6,168,114 B1 offenbart ein Türsystem für ein Passagierflugzeug mit einer das Türblatt schwenkbeweglich am Türrahmen abstützenden Trageinrichtung und einer an diese angeschlossene Hubeinrichtung.

Die DE 839 171 C offenbart eine Einrichtung zum elektrischen Antrieb eines hin- und herbeweglichen Teiles, insbesondere zum Öffnen und Schliessen von Türen.

Die DE 31 21 136 A1 beschreibt ein Schwenktor, dessen Antrieb innerhalb eines Drehlagerpfostens untergebracht ist. Dieser besteht aus einer Übertragungsvorrichtung sowie einem Antriebsmotor. In einem Steuerrohr sind entsprechende Kurvenschlitze vorgegeben, die einen Hub und gleichzeitig eine Verdrehung des Schwenktores verursachen.

Dabei wird ein elektrischer Motor verwendet, dessen Drehbewegung auf ein bewegliches Teil über ein Getriebe mittels einem diesen nachgeschalteten ausrückbaren Kupplung übertragen wird.

Nachteilig ist, dass derartige Vorrichtungen insgesamt apparativ aufwendig, schwer zu bedienen sind und zudem ein hohes Gewicht aufweisen. Diese sind teuer in der Herstellung, können nicht fernbetätigt oder fernbedient werden und erfordern meist einen manuellen hohen Kraft- und Zeitaufwand beim Bedienen, insbesondere beim Öffnen und/oder Schliessen von Türen von Fahrzeugen, insbesondere von Flugzeugtüren.

Der vorliegenden Erfindung liegt die Aufgabe zugrunde, eine Verwendung der eingangs genannten Art zu schaffen, welche die genannten Nachteile beseitigt und mit welcher auf präzise, kostengünstige und effektive Weise Türen von Fahrzeugen, insbesondere von Flugzeugen fernbedienbar zu verschliessen oder zu öffnen sind.

Eine Vorrichtung gemäß Anspruch 1 führt zur Lösung dieser Aufgabe.

Bei der vorliegenden Erfindung hat sich als besonders vorteilhaft erwiesen, mittels lediglich einer einzigen Motor-Getriebeeinheit eine Betätigungseinrichtung anzutreiben, um zuerst einen Hub eines Wellenelementes und anschliessend eine Drehbewegung eines Mitnehmerelementes zu realisieren.

Zunächst erfolgt durch axiales Bewegen eines Aktuatorelementes innerhalb eines Gehäuses der Betätigungseinrichtung ein Hub eines Wellenelementes, der eine Tür entriegelt und anhebt.

Nach dem erfolgten Hub des ausgefahrenen Wellenelementes erfolgt durch ein entsprechendes weiteres Verdrehen des Aktuatorelementes eine Kopplung der Drehbewegung mit einem Mitnehmerelement über zumindest ein Kupplungselement, so dass über das Mitnehmerelement, beispielsweise eine Flugzeugtür aufgeschwenkt werden kann. In entsprechender umgekehrten Weise lässt sich durch entsprechendes Zurückdrehen des Aktuatorelementes die Tür, insbesondere die Flugzeugtür durch Zurückbewegen des Mitnehmerelementes verschliessen und nach dem Verschliessen erfolgt durch einen entsprechenden Rückhub des Wellenelementes ein Einfahren der Flugzeugtür in die Zelle und ein gleichzeitiges oder anschliessendes Verriegeln der Flugzeugtür.

Dabei lässt sich das Aktuatorelement innerhalb des Gehäuses, insbesondere des Zylinderelementes der Betätigungseinrichtung über entsprechende Führungskulissen und Kulissenelemente, die ineinander eingreifen, axial und rotativ in die unterschiedlichen Ebenen hin- und herbewegen. Dabei soll auch daran gedacht sein, die entsprechenden Führungskulissen beispielsweise in einer Innenwand des Zylinderelementes vorzusehen, wobei dann entsprechende Kulissenelemente dem Aktuatorelement zugeordnet sind, die in entsprechende Führungskulissen eingreifen. Hierauf sei die Erfindung nicht beschränkt.

Auch sei vom vorliegenden Erfindungsgedanken mit umfasst, dass entweder das Aktuatorelement mittels der Motor-Getriebeeinheit oder das Gehäuse der Betätigungseinrichtung über die Motor-Getriebeeinheit aktiv angetrieben werden können. Hierauf sei die Erfindung nicht beschränkt. Beide Möglichkeiten sind denkbar.

Es ist eine Vorrichtung geschaffen, mit welcher mittels lediglich einer einzigen Motor-Getriebeeinheit zwei Funktionen bzw. Bewegungen zeitlich hintereinander synchronisiert ausgeführt werden können. Hierbei kann beispielsweise eine Flugzeugtür von einer Zelle entriegelt und abgehoben werden und anschliessend durch das Mitnehmerelement aufgeschwenkt werden. Durch die entsprechenden Führungskulissen wird gewährleistet, dass beim Bewegen des Mitnehmerelementes ein Rückhub verhindert bzw. gesichert ist. Ein umgekehrtes Zuschwenken der Flugzeugtür, anschliessendes Einfahren und Verriegeln der Tür ist ebenfalls nur mit einer einzigen Motor-Getriebeeinheit synchronisiert möglich. Durch die entsprechenden Führungskulissen lassen sich diese Bewegungsabläufe sehr exakt und präzise mittels lediglich einer sehr gut ansteuerbaren und regelbaren Vorrichtung mit lediglich einer einzelnen Motor-Getriebeeinheit realisieren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht mit teilweise aufgeschnittenem Längsschnitt durch eine Vorrichtung zum Betätigen von Türen, insbesondere von Flugzeugtüren;
Figur 2 einen schematisch dargestellten Teillängsschnitt durch die Betätigungseinrichtung der Vorrichtung gemäss Figur 1 in einer Gebrauchslage;
Figur 3 einen schematisch dargestellten Teillängsschnitt durch die Betätigungseinrichtung gemäss Figur 1 in einer weiteren Gebrauchslage.

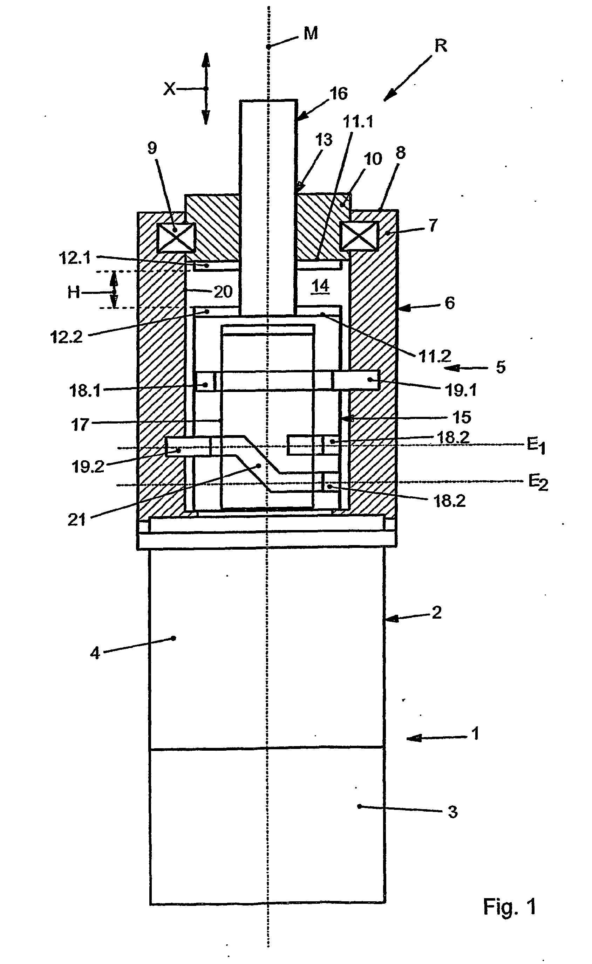

Gemäss Figur 1 weist eine Vorrichtung R zum Betätigen von Türen von Fahrzeugen, insbesondere von Flugzeugen ein Antriebselement 1 auf, welches im bevorzugten Ausführungsbeispiel als Motor-Getriebeeinheit 2 ausgebildet ist. An einen Motor 3 schliesst ein Getriebe 4 an. Das Getriebe 4 bzw. die Motor-Getriebeeinheit 2 steht mit einer Betätigungseinrichtung 5 in Verbindung. Im bevorzugten Ausführungsbeispiel weist die Betätigungseinrichtung 5 ein Gehäuse 6 auf, welches vorzugsweise als Zylinderelement 7 rotationssymmetrisch um eine Mittelachse M ausgebildet ist.

Im Bereich einer Stirnfläche 8 des Zylinderelementes 7 ist über zumindest eine Lagerung 9 ein Mitnehmerelement 10 um die Mittelachse M verdrehbar gelagert. Das Mitnehmerelement 10 überragt die Stirnfläche 8 des Zylinderelementes 7 stirnseitig geringfügig.

An einer inneren Stirnseite 11.1 des Mitnehmerelementes ist ein Kupplungselement 12.1, vorzugsweise als Zahnkupplung ausgebildet, vorgesehen. Vorzugsweise sind Mitnehmerelement 10 und Kupplungselement 12.1 kreisringartig ausgebildet und mit einer mittigen Bohrung 13 versehen.

In einem Innenraum 14 des Gehäuses 6 bzw. des Zylinderelementes 7 sitzt rotationssymmetrisch zur Mittelachse M ein Aktuatorelement 15. An eine Stirnseite 11.2 des Aktuatorelementes 15 schliesst ein Wellenelement 16 rotationssymmetrisch um die Achse M an, wobei kreisringartig der Stirnseite 11.2 ein weiteres Kupplungselement 12.2, bevorzugt als Zahnkupplung ausgebildet zugeordnet ist.

Das Wellenelement 16 ist axial in dargestellter Doppelpfeilrichtung X entlang der Mittelachse M innerhalb der Bohrung 13 des Mitnehmerelementes 10 gleitend hin- und herbewegbar gelagert.

Gleichzeitig ist das Mitnehmerelement 10 gegenüber dem Wellenelement 16 radial bewegbar bzw. gleitend geführt.

In einer äusseren Mantelfläche 17 des Aktuatorelementes 15 sind Führungskulissen 18.1, 18.2 vorgesehen, wobei die jeweiligen Führungskulissen 18.1, 18.2 über die Mantelfläche 17 zumindest teilweise umlaufend ausgebildet sind und unterschiedliche Ebenen E1, E2 miteinander verbinden.

Ein Kulissenelement 19.1, 19.2 ist einer Innenwand 20 des Gehäuses G zugeordnet.

Dabei greift das Kulissenelement 19.1 in die Führungskulisse 18.1 des Aktuatorelementes 15 und das Kulissenelement 19.2 greift in die Führungskulisse 18.2 des Aktuatorelementes 15 passgenau ein.

Die Führungskulissen 18.1, 18.2 sind zumindest teilweise um nahezu 360° umlaufend in die Mantelfläche 17 des Aktuatorelementes 15 eingeformt, wobei diese über eine Steigung 21 die jeweiligen Ebenen E1, E2 der Führungskulissen 18.1 oder 18.2 miteinander verbinden.

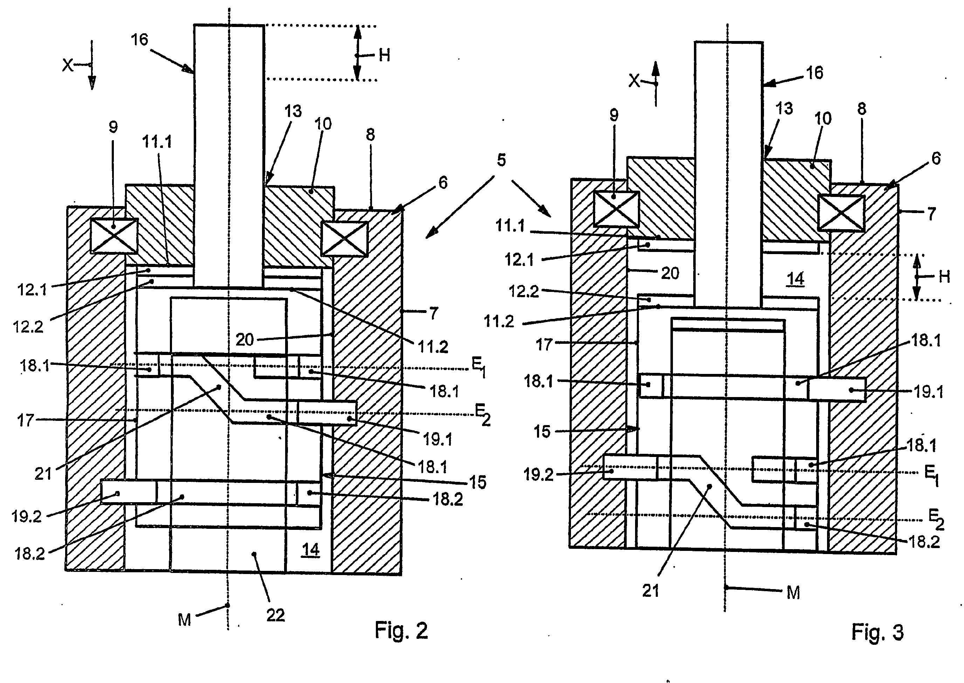

Zwischen Motor-Getriebeeinheit 2, insbesondere zwischen dem Getriebe 4 und dem Aktuatorelement 15 sitzt, wie es insbesondere in Figur 2 angedeutet ist, eine Axialführung 22, welche einen Hub H des Aktuatorelementes 15 zwischen Mitnehmerelement 10 bzw. deren Kupplungselemente 12.1, 12.2 ausgleicht. Diese kann beispielsweise eine Keilwellenverbindung sein.

Die Funktionsweise der vorliegende Erfindung ist folgende:

Im Ausführungsbeispiel der vorliegenden Erfindung gemäss Figur 1 ist eine Vorrichtung R beschrieben, bei welcher das Aktuatorelement 15 mit stirnseitig anschliessendem Wellenelement 16 mittels der Motor-Getriebeeinheit 2 rotativ antreibbar ist.

Vorzugsweise sind im vorliegenden Ausführungsbeispiel Motor-Getriebeeinheit 2 verdrehfest gelagert, so dass bei rotativem, aktiven Antreiben des Aktuatorelementes 15 um die Mittelachse M durch die oben beschriebenen Führungskulissen 18.1, 18.2, die mit den Kulissenelementen 19.1, 19.2 in Eingriff stehen, sich das Aktuatorelement 15, wie es insbesondere in Figur 3 dargestellt ist, in dargestellter X-Richtung gegen das Mitnehmerelement 10 bewegen lässt. Dabei wird das Wellenelement 16 durch das Mitnehmerelement 10 um einen Hub H bewegt.

Treffen die Stirnseiten 11.1, 11.2 beim Bewegen des Aktuatorelementes 15 gegen das Mitnehmerelement 10 aufeinander und liegen die Kupplungselemente 12.1, 12.2 eingekuppelt aneinander, wie es insbesondere in Figur 2 dargestellt ist, so entsteht über Reibschluss und/oder Formschluss eine radiale Verbindung zwischen Aktuatorelement 15 und Mitnehmerelement 10.

Die Kupplungselemente 12.1, 12.2 können formschlüssig und/oder reibschlüssig eine radiale Drehbewegung des Aktuatorelementes 15 auf die Mitnehmerscheibe 10 übertragen.

Insbesondere, wie es in Figur 2 dargestellt ist, ist nach erfolgtem Hub H des Aktuatorelementes 15 eine anschliesende rotative Bewegung des Mitnehmerelementes 10 möglich synchronisiert.

Wichtig bei der vorliegenden Erfindung ist, dass mittels lediglich nur einer einzigen Motor-Getriebeeinheit 2 zwei Funktionen des Aktuatorelementes 15 bzw. des Mitnehmerelementes 10 synchronisiert ausgeführt werden können. Zuerst erfolgt der Hub des Wellenelementes 16, bis das Aktuatorelement 15 auf das Mitnehmerelement 10 trifft, um dieses anschliessend nach erfolgtem Hub in eine rotative Bewegung, z.B. gemäss der Führungskulissen 18.1, 18.2, zu versetzen.

In entsprechender umgekehrter Reihenfolge lässt sich zunächst das Mitnehmerelement 10 durch Änderung der Antriebsrichtung der Motor-Getriebeeinheit 2 zurückbewegen und anschliessend lässt sich um einen Hub H das Aktuatorelement 15 mit Wellenelement 16, wie es von Figur 1 nach Figur 3 dargestellt ist, um einen Hub H zurückfahren, in dem entlang der Führungskulissen 18.1, 18.2 das Aktuatorelement 15 von der Ebene E₁ in die Ebene E₂ gelangt. Dabei erfolgt zuerst die Drehung der Mitnehmerscheibe 10 und anschliessen ein Rückhub des Wellenelementes 16 in eine ursprüngliche, wie in Figur 1 dargestellte Ausgangslage.

Im Rahmen einer anderen Ausführungsform soll ferner liegen, dass beispielsweise die Motor-Getriebeeinheit 2 nicht rotativ das Aktuatorelement 5 antreibt, sondern das Gehäuse 6, insbesondere dessen Zylinderelement 7. In diesem Fall ist das Wellenelement 16 an einer beliebigen Tür um die Mittelachse M verdrehfest festgelegt.

Durch Verdrehen des Gehäuses 6 lässt sich entsprechend der Drehrichtung das Aktuatorelement 15 zur Erzeugung des Hubes H in Figur 3 dargestellter X-Richtung bewegen, bis die Kupplungen 12.1, 12.2 reibschlüssig und/oder formschlüssig ineinandergreifen und anschliessend das Mitnehmerelement 10 in eine rotative Drehung um die Mittelachse M bewegt wird.

Insbesondere bei hier nicht dargestellten Flugzeugtüren lässt sich sehr kostengünstig mittels lediglich einer einzelnen Motor-Getriebeeinheit 2 durch einen Hub H des Wellenelementes 16 diese entriegeln und anheben. Nach dem Entriegeln und Anheben der Flugzeugtür erfolgt durch entsprechendes weiteres radiales Verdrehen des Aktuatorelementes 15 ein Verdrehen des Mitnehmerelementes 10 um die Mittelachse M, um die Flugzeugtüre aufzuschwenken. Ein schliessen der Türe erfolgt durch Richtungsänderung der Motor-Getriebeeinheit 2, wobei ein Absenken bzw. Einfahren und Verriegeln der Türe durch den anschliessenden Rückhub des Wellenelementes 16 erfolgt.

### Positionszahlenliste

| | | | | | |
|---|---|---|---|---|---|
| 1 | Antriebselement | 34 | | 67 | |
| 2 | Motor-Getriebeeinheit | 35 | | 68 | |
| 3 | Motor | 36 | | 69 | |
| 4 | Getriebe | 37 | | 70 | |
| 5 | Betätigungseinrichtung | 38 | | 71 | |
| 6 | Gehäuse | 39 | | 72 | |
| 7 | Zylinderelement | 40 | | 73 | |
| 8 | Stirnfläche | 41 | | 74 | |
| 9 | Lagerung | 42 | | 75 | |
| 10 | Mitnehmerelement | 43 | | 76 | |
| 11 | Stirnseite | 44 | | 77 | |
| 12 | Kupplungselement | 45 | | 78 | |
| 13 | Bohrung | 46 | | 79 | |
| 14 | Innenraum | 47 | | | |
| 15 | Aktuatorelement | 48 | | | |
| 16 | Wellenelement | 49 | | R | Vorrichtung |
| 17 | Mantelfläche | 50 | | | |
| 18 | Führungskulisse | 51 | | M | Mittelachse |
| 19 | Kulissenelement | 52 | | | |
| 20 | Innenwand | 53 | | X | Richtung |
| 21 | Steigung | 54 | | | |
| 22 | Axialführung | 55 | | E₁ | Ebene |
| 23 | | 56 | | E₂ | Ebene |
| 24 | | 57 | | | |
| 25 | | 58 | | H | Hub |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Betätigen von Türen von Fahrzeugen, insbesondere von Flugzeugen, mit einem Antriebselement (1), welches mit einer Türverriegelung zusammenwirkt, mit einer Betätigungseinrichtung (5) einem Aktuatorelement (15), einem Wellenelement (16) und einem Mitnehmerelement (10), wobei die Betätigungseinrichtung (5) ein Gehäuse (6) aufweist und innerhalb des Gehäuses (6) das Aktuatorelement (15) mit stirnseitig anschliessendem Wellenelement (16) eingesetzt ist,
**dadurch gekennzeichnet,**
**dass** mittels des Antriebselementes (1) in der Betätigungseinrichtung (5) eine Hubbewegung des Wellenelementes (16) um einen Hub (H) und anschliessend eine Drehbewegung des Mitnehmerelementes (10) erfolgt, wobei nach Durchführung des Hubes (H) das Mitnehmerelement (10) mit dem Aktuatorelement (15) koppelbar ist und durch Verdrehen des Aktuatorelementes (15) rotativ bewegbar ist, wobei das Wellenelement (16) zum Mitnehmerelement (10) axial und rotativ entkoppelt ist.

2. Vorrichtung nach Anspruch 1, **dadurch gekennzeichnet, dass** das Antriebselement (1) als eine elektrisch betriebene und ansteuerbare Motor-Getriebeeinheit (2) ausgebildet ist.

3. Vorrichtung nach Anspruch 1 oder 2, **dadurch gekennzeichnet, dass** an das Antriebselement (1) die Betätigungseinrichtung (5) anschliesst.

4. Vorrichtung nach Anspruch 2, **dadurch gekennzeichnet, dass** die Betätigungseinrichtung (5) an die Motor-Getriebeeinheit (2) anschliesst.

5. Vorrichtung nach wenigstens einem der Ansprüche 1 bis 4, **dadurch gekennzeichnet, dass** das Gehäuse (6) der Betätigungseinrichtung (5) mittels des Antriebselementes (1) rotativ um eine Mittelachse (M) antreibbar ist.

6. Vorrichtung nach Anspruch 5, **dadurch gekennzeichnet, dass** das Gehäuse (6) als um die Mittelachse (M) rotationssymmetrisches Zylinderelement (7) ausgebildet ist.

7. Vorrichtung nach wenigstens einem der Ansprüche 5 bis 6, **dadurch gekennzeichnet, dass** das Aktuatorelement (15) rotationssymmetrisch um die Mittelachse (M) ausgebildet ist und axial und radial bewegbar innerhalb des Gehäuses (6) gelagert ist.

8. Vorrichtung nach wenigstens einem der Ansprüche 1 bis 7, **dadurch gekennzeichnet, dass** Aktuatorelement (15) in seiner Mantelfläche (17) eine Mehrzahl von Führungskulissen (18.1, 18.2) aufweist.

9. Vorrichtung nach Anspruch 8, **dadurch gekennzeichnet, dass** in das Gehäuse (6), insbesondere in das Zylinderelement (7) zumindest ein Kulissenelement (19.1, 19.2) eingesetzt ist, welches mit den Führungskulissen (18.1, 18.2) des Aktuatorelementes (15) zusammenwirkt.

10. Vorrichtung nach Anspruch 8 oder 9, **dadurch gekennzeichnet, dass** die jeweiligen Führungskulissen (18.1, 18.2) in der Mantelfläche (17) unterschiedliche Ebenen (E₁, E₂) miteinander verbinden.

11. Vorrichtung nach wenigstens einem der Ansprüche 5 bis 10, **dadurch gekennzeichnet, dass** dem Antriebselement (1) das Mitnehmerelement (10) rotativ um die Mittelachse (M) gelagert zugeordnet ist.

12. Vorrichtung nach wenigstens einem der Ansprüche 1 bis 11, **dadurch gekennzeichnet, dass** das Wellenelement (16) das Mitnehmerelement (10) axial und rotativ entkoppelt durchgreift.

13. Vorrichtung nach wenigstens einem der Ansprüche 6 bis 12, **dadurch gekennzeichnet, dass** das Mitnehmerelement (10) über zumindest eine Lagerung (9) stirnseitig im Zylinderelement (7) radial verdrehbar gelagert ist.

14. Vorrichtung nach Anspruch 13, **dadurch gekennzeichnet, dass** das Mitnehmerelement (10) eine Stirnfläche (8) des Zylinderelementes (7) axial überragt.

15. Vorrichtung nach wenigstens einem der Ansprüche 1 bis 14, **dadurch gekennzeichnet, dass** dem Aktuatorelement (15) und dem Mitnehmerelement (10) jeweils an Stirnseiten (11.1, 11.2) Kupplungselemente (12.1, 12.2) zugeordnet sind.

16. Vorrichtung nach Anspruch 15, **dadurch gekennzeichnet, dass** die Kupplungselemente (12.1, 12.2) des Mitnehmerelementes (10) und des Aktuatorelementes (15) radial gegeneinander ausgerichtet sind.

17. Vorrichtung nach wenigstens einem der Ansprüche 1 bis 16, **dadurch gekennzeichnet, dass** zwischen Betätigungseinrichtung (5) und Antriebselement (1), insbesondere zwischen Betätigungseinrichtung (5) und Motor-Getriebeeinheit (2) eine Axialführung (22) oder axial bewegbare Keilwellenverbindungen vorgesehen ist.

18. Vorrichtung nach wenigstens einem der Ansprüche 5 bis 17, **dadurch gekennzeichnet, dass** über die Motor-Getriebeeinheit (2) das Aktuatorelement (15) oder das Gehäuse (6), insbesondere das Zylinderelement (7) rotativ um die Mittelachse (M) antreibbar ist.

19. Vorrichtung nach wenigstens einem der Ansprüche 15 bis 18, **dadurch gekennzeichnet, dass** durch rotatives Antreiben von Aktuatorelement (15) oder Gehäuse (6), insbesondere Zylinderelement (7) das Aktuatorelement (15) um einen Hub (H) durch das Führen der Kulissenelemente (19.1, 19.2) in der Führungskulisse (18.1, 18.2) gegen das Mitnehmerelement (10) bewegbar ist, bis die Kupplungselemente (12.1, 12.2) vom Mitnehmerelement (10) und Aktuatorelement (15) gegeneinander anschlagen und durch weiteres radiales Verdrehen von Aktuatorelement (15) oder Gehäuse (6) das Mitnehmerelement (10) rotativ bewegbar ist.

## Claims

1. Device for actuating doors of vehicles, in particular of aircraft, having a drive element (1) that interacts with a door latch, having an actuating device (5), an actuator element (15), a shaft element (16) and a driver element (10), wherein the actuating device (5) comprises a housing (6) and inside the housing (6) the actuator element (15) is inserted with the shaft element (16) adjoining its end face,
**characterized in**
**that** by means of the drive element (1) in the actuating device (5) a lifting movement of the shaft element (16) by a stroke (H) and then a rotational movement of the driver element (10) occurs, wherein on completion of the stroke (H) the driver element (10) is connectable to the actuator element (15) and by twisting of the actuator element (15) is rotationally movable, wherein the shaft element (16) is axially and rotationally uncoupled relative to the driver element (10).

2. Device according to claim 1, **characterized in that** the drive element (1) takes the form of an electrically operated and controllable motor/gear unit (2).

3. Device according to claim 1 or 2, **characterized in that** the drive element (1) is adjoined by the actuating device (5).

4. Device according to claim 2, **characterized in that** the actuating device (5) adjoins the motor/gear unit (2).

5. Device according to at least one of claims 1 to 4, **characterized in that** the housing (6) of the actuating device (5) may be set in rotation about a centre line (M) by means of the drive element (1).

6. Device according to claim 5, **characterized in that** the housing (6) takes the form of a cylinder element (7) that is rotationally symmetrical around the centre line (M) .

7. Device according to at least one of claims 5 to 6, **characterized in that** the actuator element (15) is designed rotationally symmetrical around the centre line (M) and is mounted in an axially and radially movable manner inside the housing (6).

8. Device according to at least one of claims 1 to 7, **characterized in that** actuator element (15) has in its lateral surface (17) a plurality of guide links (18.1, 18.2).

9. Device according to claim 8, **characterized in that** inserted into the housing (6), in particular into the cylinder element (7) is at least one link element (19.1, 19.2), which interacts with the guide links (18.1, 18.2) of the actuator element (15).

10. Device according to claim 8 or 9, **characterized in that** the respective guide links (18.1, 18.2) in the lateral surface (17) connect different planes (E₁, E₂) to one another.

11. Device according to at least one of claims 5 to 10, **characterized in that** the driver element (10) is associated with the drive element (11) such that it is mounted rotatably about the centre line (M).

12. Device according to at least one of claims 1 to 11, **characterized in that** the shaft element (16) engages through the driver element (10) axially and in a rotationally uncoupled manner.

13. Device according to at least one of claims 6 to 12, **characterized in that** the driver element (10) is mounted in a radially twistable manner in the end of the cylinder element (7) by means of at least one bearing arrangement (9).

14. Device according to claim 13, **characterized in that** the driver element (10) projects axially beyond an end face (8) of the cylinder element (7).

15. Device according to at least one of claims 1 to 14, **characterized in that** associated with the actuator element (15) and the driver element (10) in each case at the ends (11.1, 11.2) are coupling elements (12.1, 12.2).

16. Device according to claim 15, **characterized in that** the coupling elements (12.1, 12.2) of driver element (10) and actuator element (15) are aligned radially towards to one another.

17. Device according to at least one of claims 1 to 16, **characterized in that** between actuating device (5) and drive element (1), in particular between actuating device (5) and motor/gear unit (2) an axial guide (22) or axially movable spline fittings are provided.

18. Device according to at least one of claims 5 to 17, **characterized in that** by means of the motor/gear unit (2) the actuator element (15) or the housing (6), in particular the cylinder element (7) may be set in rotation about the centre line (M).

19. Device according to at least one of claims 15 to 18, **characterized in that**, by setting the actuator element (15) or housing (6), in particular cylinder element (7) in rotation, the actuator element (15) is movable by virtue of the guidance of the link elements (19.1, 19.2) in the guide link (18.1, 18.2) by a stroke (H) towards the driver element (10) until the coupling elements (12.1, 12.2) of driver element (10) and actuator element (15) strike against one another and by further radial twisting of actuator element (15) or housing (6) the driver element (10) is rotationally movable.

## Revendications

1. Dispositif pour l'actionnement de portes de véhicules, en particulier d'avions, avec un élément d'entraînement (1) qui coopère avec un verrouillage de porte, avec un dispositif d'actionnement (5), un élément actionneur (15), un élément d'arbre (16) et un élément de doigt d'entraînement (10), le dispositif d'actionnement (5) présentant un boîtier (6) et dans le boîtier (6) étant placé l'élément actionneur (15) avec l'élément d'arbre (16) qui s'y raccorde du côté frontal,
**caractérisé par le fait**
**qu'**au moyen de l'élément d'entraînement (1) dans le dispositif d'actionnement (5) a lieu un mouvement de levage de l'élément d'arbre (16) selon une course (H) et ensuite un mouvement de rotation de l'élément de doigt d'entraînement (10), l'élément de doigt d'entraînement (10) pouvant, après exécution de la course (H), être couplé avec l'élément actionneur (15) et étant déplaçable en rotation par rotation de l'élément actionneur (15), l'élément d'arbre (16) étant découplé axialement et en rotation de l'élément de doigt d'entraînement (10).

2. Dispositif selon la revendication 1, **caractérisé par le fait que** l'élément d'entraînement (1) est réalisé sous forme d'un ensemble motoréducteur (2) à fonctionnement et activation électrique.

3. Dispositif selon la revendication 1 ou 2, **caractérisé par le fait qu'**à l'élément d'entraînement (1) est raccordé le dispositif d'actionnement (5).

4. Dispositif selon la revendication 2, **caractérisé par le fait que** le dispositif d'actionnement (5) se raccorde à l'ensemble motoréducteur (2).

5. Dispositif selon au moins l'une des revendications 1 à 4, **caractérisé par le fait que** le boîtier (6) du dispositif d'actionnement (5) peut être entraîné en rotation autour d'un axe médian (M) au moyen de l'élément d'entraînement (1).

6. Dispositif selon la revendication 5, **caractérisé par le fait que** le boîtier (6) est réalisé sous forme d'un élément cylindrique (7) symétrique en rotation autour de l'axe médian (M).

7. Dispositif selon au moins l'une des revendications 5 à 6, **caractérisé par le fait que** l'élément actionneur (15) est réalisé de manière symétrique en rotation autour de l'axe médian (M) et est monté de manière déplaçable axialement et radialement à l'intérieur du boîtier (6).

8. Dispositif selon au moins l'une des revendications 1 à 4, **caractérisé par le fait que** l'élément actionneur (15) présente, dans sa surface d'enveloppe (17), une pluralité de coulisses de guidage (18.1, 18.2).

9. Dispositif selon la revendication 8, **caractérisé par le fait que** dans le boîtier (6), en particulier dans l'élément cylindrique (7), est placé un élément de coulisse (19.1, 19.2) qui coopère avec les coulisses de guidage (18.1, 18.2) de l'élément actionneur (15).

10. Dispositif selon la revendication 8 ou 9, **caractérisé par le fait que** les coulisses de guidage (18.1, 18.2) respectifs dans la surface d'enveloppe (17) relient différents plans (E₁, E₂) entre eux.

11. Dispositif selon au moins l'une des revendications 5 à 10, **caractérisé par le fait qu'**à l'élément d'entraînement (1) est associé l'élément de doigt d'entraînement (10) monté en rotation autour de l'axe médian (M).

12. Dispositif selon au moins l'une des revendications 1 à 11, **caractérisé par le fait que** l'élément d'arbre (16) traverse l'élément de doigt d'entraînement (10) de manière découplée axialement et en rotation.

13. Dispositif selon au moins l'une des revendications 6 à 12, **caractérisé par le fait que** l'élément de doigt d'entraînement (10) est monté, par l'intermédiaire d'au moins un palier (9), de manière déplaçable radialement du côté frontal dans l'élément cylindrique (7).

14. Dispositif selon la revendication 13, **caractérisé par le fait que** l'élément de doigt d'entraînement (10) fait saillie axialement au-dessus d'une face frontale (8) de l'élément cylindrique (7).

15. Dispositif selon au moins l'une des revendications 1 à 14, **caractérisé par le fait qu'**à chacun de l'élément actionneur (15) et de l'élément de doigt d'entraînement (10) sont associés, aux faces frontales (11.1, 11.2), des éléments de couplage (12-1, 12.2).

16. Dispositif selon la revendication 15, **caractérisé par le fait que** les éléments de couplage (12.1, 12.2) de l'élément de doigt d'entraînement (10) et de l'élément actionneur (15) sont orientés radialement opposés l'un à l'autre.

17. Dispositif selon au moins l'une des revendications 1 à 16, **caractérisé par le fait qu'**entre le dispositif d'actionnement (5) et l'élément d'entraînement (1), en particulier entre le dispositif d'actionnement (5) et l'ensemble motoréducteur (2) sont prévus un guidage axial (22) ou des connexions à arbre cannelé déplaçables axialement.

18. Dispositif selon au moins l'une des revendications 5 à 17, **caractérisé par le fait que** par l'intermédiaire de l'ensemble motoréducteur (2) peut être entraîné l'élément actionneur (15) ou le boîtier (6), en particulier l'élément cylindrique (7), en rotation autour de l'axe médian (M).

19. Dispositif selon au moins l'une des revendications 15 à 18, **caractérisé par le fait que** par l'entraînement en rotation de l'élément actionneur (15) ou du boîtier (6), en particulier de l'élément cylindrique (7), l'élément actionneur (15) peut être déplacé d'une course (H) par le guidage des éléments de coulisse (19.1, 19.2) dans la coulisse de guidage (18,1, 13.2) contre l'élément de doigt d'entraînement (10), jusqu'à ce que les éléments de couplage (12.1, 12.2) de l'élément de doigt d'entraînement (10) et de l'élément d'actionneur (15) viennent en butée l'un contre l'autre et que par une rotation radiale continue de l'élément d'actionneur (15) ou du boîtier (6) peut être déplacé en rotation l'élément de doigt d'entraînement (10).
